# EUROPEAN PATENT APPLICATION

(11) **EP 3 321 075 A1**
(43) Date of publication of application: **16.05.2018**
(21) Application number: 16820990.6
(22) Date of filing: 01.06.2016
(51) Int. Cl.: B29C 67/20, B01D 69/00, B01D 69/06, B01D 71/48, B01D 71/64, B23K 15/00, B23K 15/08, C08J 9/00

(54) **RESIN FILM**

(30) Priority: 09.07.2015 JP 2015138172
(71) Applicant: Nitto Denko Corporation, Ibaraki-shi, Osaka 567-8680 (JP)
(72) Inventor: YAMAMOTO, Hajime, Ibaraki-shi Osaka 567-8680 (JP); MIYAZAKI, Tsukasa, Ibaraki-shi Osaka 567-8680 (JP); TAKEDA, Yuuki, Ibaraki-shi Osaka 567-8680 (JP); FURUYAMA, Satoru, Ibaraki-shi Osaka 567-8680 (JP)
(74) Representative: Müller-Boré & Partner Patentanwälte PartG mbB
(86) International application number: PCT/JP2016/002630
(87) International publication number: WO 2017/006510

(57) **Abstract**

A resin film (2) has through holes (21) formed to extend through the thickness of the resin film (2). The through holes (21) are pillar-shaped. An average density of the through holes (21) is 1 × 10⁶ to 1 × 10¹² holes/cm². An average diameter of the through holes (21) is 1 to 310 nm. A degree of variability of the diameter of the through holes (21) is 30% or less, the degree of variability of the diameter of the through holes (21) obtained by dividing a standard deviation of the diameter of the through holes (21) by the average diameter of the through holes (21) and multiplying the resulting value by 100.

## Description

### TECHNICAL FIELD

The present invention relates to a resin film having through holes formed to extend through the thickness of the resin film.

### BACKGROUND ART

Various studies related to films and/or holes have been conducted (For example, refer to Patent Literatures 1 to 4). In Patent Literature 1, for example, formation of through holes in a resin film by ion beam irradiation and etching is described.

### CITATION LIST

### Patent Literature

Patent Literature 1: JP 2015-65639 A
Patent Literature 2: JP 2009-28714 A
Patent Literature 3: JP 2005-183048 A
Patent Literature 4: JP 2009-519042 A

### SUMMARY OF INVENTION

### Technical Problem

A study by the present inventors has revealed that the characteristics of a resin film having through holes formed to extend through the thickness of the resin film vary from spot to spot in the in-plane direction (the direction perpendicular to the thickness direction) of the resin film. The variation in characteristics is desirably small.

### Solution to Problem

Therefore, the present invention provides a resin film having through holes formed to extend through the thickness of the resin film, wherein
the through holes are pillar-shaped;
an average density of the through holes is 1 × 10⁶ to 1 × 10¹² holes/cm²;
an average diameter of the through holes is 1 to 310 nm; and
a degree of variability of the diameter of the through holes is 30% or less, the degree of variability of the diameter of the through holes obtained by dividing a standard deviation of the diameter of the through holes by the average diameter of the through holes and multiplying the resulting value by 100.

### Advantageous Effects of Invention

The resin film according to the present invention has a low degree of variability of the diameter of the through holes. Therefore, the present invention is advantageous in decreasing the variation in characteristics from spot to spot on the resin film.

### BRIEF DESCRIPTION OF DRAWINGS

FIG. 1 is a cross-sectional view schematically showing an example of the resin film.
FIG. 2 is a top view schematically showing an example of the resin film.

### DESCRIPTION OF EMBODIMENTS

Hereinafter, an embodiment of the present invention will be described with reference to the accompanying drawings. The following description is only illustrative of the embodiment of the present invention and has no intention to limit the present invention.

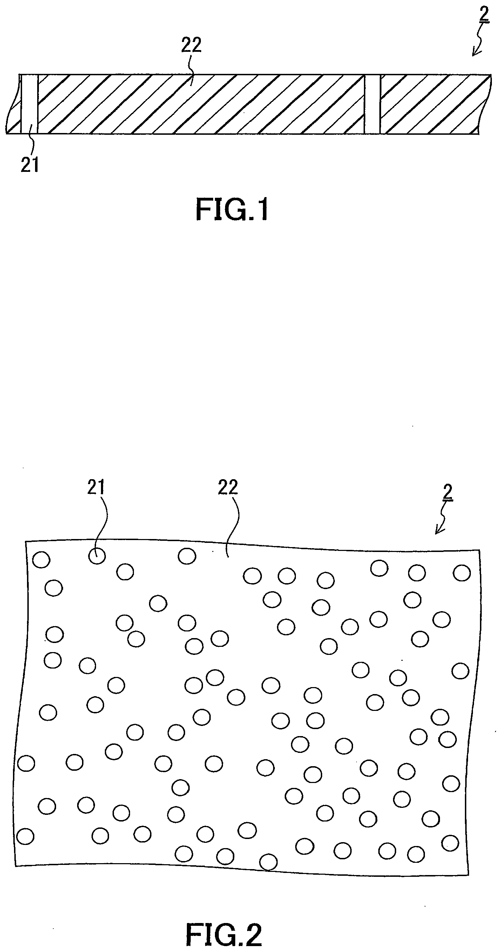

A resin film according to the present embodiment is explained using FIG. 1 and FIG. 2. A resin film 2 has through holes 21 formed to extend through the thickness of the resin film 2. Specifically, the resin film 2 has a solid part 22 the inside of which is filled with a resin and the through holes 21. The resin film 2 is a resin film having no passages that allow through-thickness air permeation other than the through holes 21. The resin film 2 is typically a resin film having no holes other than the through holes 21. The through holes 21 are straight holes that are pillar-shaped (cylindrical in FIGS. 1 and 2). The through holes 21 have openings at both principal surfaces of the resin film 2.

The resin film 2 includes, for example, at least one resin selected from polyethylene terephthalate (PET), polyethylene naphthalate (PEN), polyimide (PI), polycarbonate (PC), and polyvinylidene fluoride (PVdF).

In the present embodiment, the direction in which the through holes 21 extend is the direction perpendicular to the principal surfaces of the resin film 2. The direction in which the through holes 21 extend may be oblique with respect to the direction perpendicular to the principal surfaces of the resin film 2 as long as the through holes 21 extend through the thickness of the resin film 2.

An average diameter of the through holes 21 is 1 to 310 nm. The average diameter of the through holes 21 may be 1 to 100 nm, 1 to 45 nm, 1 to 30 nm, or 1 to 10 nm.

A degree of variability of the diameter of the through holes 21 is 30% or less, the degree of variability of the diameter of the through holes 21 obtained by dividing a standard deviation of the diameter of the through holes 21 by the average diameter of the through holes 21 and multiplying the resulting value by 100. The degree of variability of the diameter of the through holes 21 is an index of variation in diameter. The degree of variability of the diameter of the through holes 21 may be 25% or less, 17% or less, or 10% or less.

The standard deviation of the diameter of the through holes 21, like the degree of variability of the diameter of the through holes 21, is also an index of the variation in diameter. In the present embodiment, the standard deviation of the diameter of the through holes 21 is 20 nm or less. The standard deviation of the diameter of the through holes 21 may be 16 nm or less, 6 nm or less, or 2 nm or less.

The average, standard deviation, and degree of variability of the diameter of the through holes 21 herein are determined in the manner described hereinafter. First, the resin film 2 is cut into small pieces of a predetermined size. The predetermined size as observed in the thickness direction is, for example, but not limited to, 1 cm × 1 cm. The number of the small pieces is, for example, but not limited to, 10. The small pieces are cut out from one continuous area of the resin film 2. Next, the small pieces are layered into a layered product. The same procedure is repeated to obtain a plurality of layered products. The number of the layered products is, for example, but not limited to, 30. The small pieces (for example, 10 × 30 = 300 small pieces) composing the layered products are obtained from an area with a size of 300 cm² or less of the resin film 2 as observed in the thickness direction. Transmission measurement by a small angle X-ray scattering method is carried out for the individual layered products to obtain measured values of the diameter of the through holes 21. An average of the measured values is employed as the average diameter of the through holes 21. A standard deviation of the measured values is employed as the standard deviation of the diameter of the through holes 21. The degree of variability of the diameter of the through holes 21 is obtained by dividing the thus determined standard deviation of the diameter of the through holes 21 by the average diameter of the through holes 21 and multiplying the resulting value by 100.

An average density (the number of holes) of the through holes 21 is 1 × 10⁶ to 1 × 10¹² holes/cm². The average density of the through holes 21 may be 1 × 10⁶ to 1 × 10¹⁰ holes/cm² or 1 × 10⁷ to 1 × 10¹² holes/cm².

In the present embodiment, a standard deviation of the density of the through holes 21 is 1 × 10¹¹ holes/cm² or less. The standard deviation of the density of the through holes 21 may be 1 × 10⁹ holes/cm² or less, 1 × 10⁸ holes/cm² or less, or 7.0 × 10⁷ holes/cm² or less.

In the present embodiment, a degree of variability of the density of the through holes 21 is 40% or less, the degree of variability of the density of the through holes 21 obtained by dividing the standard deviation of the density of the through holes 21 by the average density of the through holes 21 and multiplying the resulting value by 100. The degree of variability of the density of the through holes 21 may be 30% or less or 20% or less.

The average, standard deviation, and degree of variability of the density of the through holes 21, as described herein, are determined in the manner described hereinafter. First, areas adjacent to each other are observed individually with a scanning electron microscope (SEM). The size of each area as observed in the thickness direction is, for example, but not limited to, 800 nm × 800 nm. The number of the areas is, for example, but not limited to, 30. Next, the number of the through holes captured in a SEM image taken is counted visually. The resulting number is then converted to the density of the through holes 21 (unit: holes/cm²) to obtain a measured value of the density. An average of such measured values is employed as the average density of the through holes 21. A standard deviation of the obtained measured values is employed as the standard deviation of the density of the through holes 21. The degree of variability of the standard deviation of the density of the through holes 21 is obtained by dividing the thus determined standard deviation of the density of the through holes 21 by the average density of the through holes 21 and multiplying the resulting value by 100.

In the present embodiment, the thickness of the resin film 2 is 3 to 50 pm. The thickness of the resin film 2 may be 4 to 30 µm or 5 to 20 µm.

The resin film 2 may be colored. Coloring can be accomplished, for example, by dying the resin film 2 or incorporating a colorant into the resin film 2. Coloring may be performed, for example, so as to enable absorption of light in the wavelength range of 380 nm to 500 nm, inclusive. That is, the resin film 2 may be colored in such a manner that light in the wavelength range of 380 nm to 500 nm, inclusive is absorbed. To this end, for example, the resin film 2 contains a colorant having the ability to absorb light in the wavelength range of 380 nm to 500 nm, inclusive or is dyed with a dye having the ability to absorb light in the wavelength range of 380 nm to 500 nm, inclusive. In this case, the resin film 2 can be colored, for example, blue, gray, brown, pink, green, or yellow. The resin film 2 may be colored black, gray, brown, or pink. Depending on the type of the material composing the resin film 2, the uncolored resin film 2 is, for example, transparent or white.

The through holes 21 can be formed, for example, by ion beam irradiation and etching of a resin film (typically an imperforate film) serving as a base film. The ion beam irradiation and etching allow a large number of the through holes 21 having uniform opening diameters and uniform axial directions (directions in which the through holes extend) to be formed in the resin film 2.

When the base film is irradiated with an ion beam, an irradiation density is adjusted according to the density of the through holes 21 to be formed in the resin film 2. The irradiation density is, for example, 1 × 10⁶ to 1 × 10¹² ions/cm². The irradiation density may be 1 × 10⁶ to 1 × 10¹⁰ ions/cm² or 1 × 10⁷ to 1 × 10¹² ions/cm².

The ionic species of the ion beam includes, for example, at least one selected from the group consisting of xenon (Xe), argon (Ar), and krypton (Kr). The acceleration energy is, for example, 100 to 1000 MeV The acceleration energy may be 200 to 500 MeV.

The base film includes, for example, at least one resin selected from polyethylene terephthalate, polyethylene naphthalate, polyimide, polycarbonate, and polyvinylidene fluoride. These resins can be hydrolyzed by an etching solution including an alkaline solution. The alkaline solution is a solution containing, for example, potassium hydroxide and/or sodium hydroxide, and may further contain, for example, a solvent (for example, an inorganic solvent such as water or an organic solvent such as ethanol) and an oxidant.

Etching for forming the through holes 21 is preferably allowed to progress slowly to obtain the resin film 2 having the through holes 21 whose diameter and variation in diameter are small as described above. To allow etching to progress slowly, the etching solution preferably contains a sufficiently low concentration of an alkali component. When the etching solution contains as a solvent a mixture of ethanol and water in a weight ratio (ethanol:water) of about 21:79 and contains sodium hydroxide as an alkali component, the concentration of sodium hydroxide may be around 1 to 5 wt%. The preferred temperature of the etching solution is 70 to 90 °C, and the preferred time for etching is 15 to 120 minutes. Conventionally, etching may be performed using an etching solution containing a higher concentration of the alkali component. However, the resin film having the through holes whose diameter and variation in diameter are small as described above cannot be obtained through the etching using the etching solution containing a high concentration of the alkali component.

The resin film 2 is expected to be used in various technical fields.

The resin film 2 can be used, for example, for filtration. Specifically, since the diameter of the through holes 21 is small as described above, the resin film 2 can function well as a semipermeable membrane. The small variation in diameter of the through holes 21 is favorable for achievement of uniform filtration performance across the principal surfaces of the resin film 2. In the present embodiment, the through holes 21 extend straight, which enables a liquid to move straight inside the through holes 21. This straight movement can contribute to a reduction in energy (electric power) needed to drive a feed pump or a reduction in pressure loss in a filtration system. The resin film 2 is applicable to general filtration membranes including a nanofiltration membrane, ultrafiltration membrane, and microfiltration membrane. For example, Patent Literature 2 can be referred to for filtration membranes for use in filtration.

Conventionally, a low refractive index layer has been formed on an electroluminescent layer in order to increase the rate of extraction of light from the electroluminescent layer. The resin film 2 can also be used as such a low refractive index layer. Specifically, since the through holes 21 are high in density and small in diameter as described above, the through holes 21 can provide the resin film 2 with a refractive index that enables the resin film 2 to function suitably as a low refractive index layer. The small through holes 21 are also favorable in terms of achievement of transparency. The small variation in diameter of the through holes 21 as described above is favorable for achievement of a uniform refractive index across the principal surfaces of the resin film 2. For example, Patent Literature 3 can be referred to for technologies related to the low refractive index layer for improving the light extraction rate.

Furthermore, for example, the resin film 2 can be used as a scaffold for cell culture. Since the through holes 21 of the resin film 2 are high in density, small in diameter, and small in variation in diameter as described above, the resin film 2 can function suitably as a scaffold for cell culture. Specifically, the selective permeability to cells can be exercised suitably. For example, Patent Literature 4 can be referred to for technologies related to scaffolds for cell culture.

The resin film 2 can also function as a waterproof gas-permeable membrane that prevents passage of water and allows passage of gas.

### EXAMPLES

Hereinafter, the present invention will be described in detail with reference to Examples. It should be noted that Examples given below are only illustrative of the present invention and do not limit the present invention. First, the methods for evaluating samples according to Examples and Comparative Example will be described.

### <Film thickness>

The thickness of each sample was measured at five randomly selected spots using a dial indicator (manufactured by Mitutoyo Corporation), and an average of the measured values was employed as the film thickness.

### <Average, standard deviation σ₁, and degree of variability of hole diameter>

The sample was cut to obtain 30 sets of 10 small pieces. Each of the small pieces is 1 cm × 1 cm in size. The 10 small pieces of each set were cut out from a continuous area of the sample. The 30 sets were also cut out from a continuous area of the sample. The 10 small pieces of each set were layered to create 30 layered products each made of the 10 small pieces. Each of the 30 layered products was subjected to transmission measurement (small angle X-ray scattering method). Specifically, a measured value of the diameter of the through holes (hole diameter) was determined from a diffraction pattern produced by X-ray (small angle X-ray) irradiation using NANO-Viewer, an X-ray instrument for nanostructure analysis (small angle X-ray scattering measuring instrument) manufactured by Rigaku Corporation. An average hole diameter and a standard deviation σ₁ of the hole diameter were calculated from 30 measured values determined in the above manner. A degree of variability of the hole diameter was calculated by dividing the standard deviation σ₁ of the hole diameter by the average hole diameter and multiplying the resulting value by 100. In the transmission measurement carried out with the above instrument, the following measurement conditions were adopted.

### [Measurement conditions]

X-ray: CuKa ray
Wavelength: 0.15418 nm
Output: 40 kV-30 mA
First slit: ø 0.2 mm
Second slit: ø 0.1 mm
Third slit: ø 0.25 mm
Detector: PILATUS 300 K
Pixel size: 127 µm × 127 pm
Camera length: 1221 mm
X-ray exposure time: 30 minutes
Environmental temperature: 25°C

### <Average, standard deviation σ₂, and degree of variability of hole density>

The hole density was determined for thirty 800 nm × 800 nm areas adjacent to each other at a principal surface of each sample. That is, each of the 30 areas was observed with a scanning electron microscope (SEM) (JSM-6510 LV, manufactured by JEOL Ltd.), and a SEM image was taken. The number of the through holes captured in the SEM image was counted visually, and then the resulting number was converted to the density of the through holes (hole density) (unit: holes/cm²). The hole density in each of the 30 areas was determined in this manner. An average hole density and a standard deviation σ₂ of the hole density were calculated from the 30 determined values of the hole density. A degree of variability of the hole density was calculated by dividing the standard deviation σ₂ of the hole density by the average hole density and multiplying the resulting value by 100.

### <Examples 1 to 6>

An imperforate, ion-beam irradiated PET film (manufactured by it4ip) was prepared. The PET film had a thickness of 12 pm. The PET film is a film irradiated with an ion beam at an irradiation density of 3.0 × 10⁸ ions/cm². Through holes were formed in the PET film by etching. Table 1 shows etching conditions. As shown in Table 1, the etching solution used in Examples 1 to 6 was an aqueous solution containing 3 wt% of sodium hydroxide and 20 wt% of ethanol and being kept at a temperature of 80 °C (when the total amount of water, ethanol, and sodium hydroxide is 100 parts by weight, the amount of ethanol is 20 parts by weight, that of water is 77 parts by weight, and that of sodium hydroxide is 3 parts by weight). The etching time was 15 minutes in Example 1, 21 minutes in Example 2, 30 minutes in Example 3, 35 minutes in Example 4, 60 minutes in Example 5, and 120 minutes in Example 6. There was no change in the thickness of the PET film before and after the etching. After the etching, the PET film was taken out from the etching solution, washed with water, and then dried. Samples of Examples 1 to 6 were obtained in the above manner. Table 2 shows the film thickness, average hole diameter, standard deviation of hole diameter, degree of variability of hole diameter, average hole density, standard deviation of hole density, and degree of variability of hole density for the samples of Examples 1 to 6.

### <Comparative Example 1>

An imperforate PET film that was the same as the imperforate PET films prepared in Examples 1 to 6 was prepared. Through holes were formed in the PET film by etching. Table 1 shows etching conditions. As shown in Table 1, the etching solution used in Comparative Example 1 was an aqueous solution containing 11 wt% of sodium hydroxide and 10 wt% of ethanol and being kept at a temperature of 80 °C (when the total amount of water, ethanol, and sodium hydroxide is 100 parts by weight, the amount of ethanol is 10 parts by weight, that of water is 79 parts by weight, and that of sodium hydroxide is 11 parts by weight). In Comparative Example 1, the etching time was 15 minutes. There was no change in the thickness of the PET film before and after the etching. After the etching, the PET film was taken out from the etching solution, washed with water, and then dried. A sample of Comparative Example 1 was obtained in the above manner. Table 2 shows the film thickness, average hole diameter, standard deviation of hole diameter, degree of variability of hole diameter, average hole density, standard deviation of hole density, and degree of variability of hole density for the sample of Comparative Example 1.

**[Table 1]**

| | Concentration of NaOH (wt%) | Concentration of ethanol (wt%) | Etching temperature (°C) | Etching time (min) |
|---|---|---|---|---|
| Example 1 | 3 | 20 | 80 | 15 |
| Example 2 | 3 | 20 | 80 | 21 |
| Example 3 | 3 | 20 | 80 | 30 |
| Example 4 | 3 | 20 | 80 | 35 |
| Example 5 | 3 | 20 | 80 | 60 |
| Example 6 | 3 | 20 | 80 | 120 |
| Comparative Example 1 | 11 | 10 | 80 | 15 |

0039

**[Table 2]**

| | Film thickness (µm) | Average hole diameter (nm) | Standard deviation of hole diameter (nm) | Degree of variability of hole diameter (%) | Average hole density (holes/cm²) | Standard deviation of hole density (holes/cm²) | Degree of variability of hole density (%) |
|---|---|---|---|---|---|---|---|
| Example 1 | 12 | 3.3 | 0.85 | 26 | 1.9 E+08 | 6.6 E+07 | 35 |
| Example 2 | 12 | 8.1 | 1.8 | 22 | 2.1 E+08 | 4.6 E+07 | 22 |
| Example 3 | 12 | 23 | 4.4 | 19 | 2.7 E+08 | 3.7 E+07 | 14 |
| Example 4 | 12 | 33 | 5.7 | 17 | 2.7 E+08 | 3.1 E+07 | 12 |
| Example 5 | 12 | 115 | 11 | 9.6 | 2.6 E+08 | 1.5 E+07 | 5.8 |
| Example 6 | 12 | 302 | 14 | 4.6 | 2.8 E+08 | 1.3 E+07 | 4.6 |
| Comparative Example 1 | 12 | 820 | 260 | 32 | 2.9 E+08 | 1.8 E+07 | 6.3 |

## Claims

1. A resin film comprising through holes formed to extend through a thickness of the resin film, wherein
the through holes are pillar-shaped;
an average density of the through holes is 1 × 10⁶ to 1 × 10¹² holes/cm²;
an average diameter of the through holes is 1 to 310 nm; and
a degree of variability of the diameter of the through holes is 30% or less, the degree of variability of the diameter of the through holes being obtained by dividing a standard deviation of the diameter of the through holes by the average diameter of the through holes and multiplying the resulting value by 100.

2. The resin film according to claim 1, wherein the standard deviation of the diameter of the through holes is 20 nm or less.

3. The resin film according to claim 1, wherein the average diameter of the through holes is 1 to 100 nm.

4. The resin film according to claim 1, wherein a standard deviation of the density of the through holes is 7.0 × 10⁷ holes/cm² or less.

5. The resin film according to claim 1, wherein a degree of variability of the density of the through holes is 40% or less, the degree of variability of the density of the through holes being obtained by dividing a standard deviation of the density of the through holes by the average density of the through holes and multiplying the resulting value by 100.

6. The resin film according to claim 1, wherein a material of the resin film comprises at least one selected from the group consisting of polyethylene terephthalate, polyethylene naphthalate, and polyimide.

7. The resin film according to claim 1, wherein the resin film is colored.
